# EUROPÄISCHE PATENTANMELDUNG

(11) **EP 0 552 401 A1**
(43) Veröffentlichungstag der Anmeldung: **28.07.1993**
(21) Anmeldenummer: 92108612.0
(22) Anmeldetag: 21.05.1992
(51) Int. Cl.: F27D 1/00, F27B 3/12

(54) **Abschlusssteinanordnung für industrielle Schmelzöfen**

(30) Priorität: 08.01.1992 DE 4200243
(71) Anmelder: DYKO INDUSTRIEKERAMIK GMBH, D-40521 Düsseldorf (DE)
(72) Erfinder: Fröhlich, Günter, Cincinatti, Ohio 45243 (US)
(74) Vertreter: Rehberg, Elmar, Dipl.-Ing.

(57) **Zusammenfassung**

Eine Abschlußsteinanordnung (14) für einen industriellen Schmelzofen (10) füllt den Zwischenraum zwischen einer Ofenwandung und einem Träger (19), auf dem der Oberbau des Ofens aufgelagert ist. Die Abschlußsteinanordnung (14) besitzt einen Trägerblock (26) mit einer gekrümmten Oberfläche (27) sowie einen Nasenblock (37), der eine entsprechend gekrümmte untere Oberfläche (38) aufweist. Die Höhe des Querschnitts der Abschlußsteinanordnung wird zum Einschieben in den Zwischenraum der Ofenwandung dadurch reduziert, daß der Nasenblock nach vorn gleitend bewegt wird. Der vergrößerte Nasenbereich (42) ist so ausgebildet, daß er die Stahlplatte (19) abdeckt, wenn der Nasenblock (37) gleitend zurückgezogen wurde, und zwar in eine Stellung, in der die Enden des Trägerblocks und des Nasenblocks im wesentlichen miteinander fluchten.

## Beschreibung

### Anwendungsbereich der Erfindung

Die vorliegende Erfindung bezieht sich auf Bauelemente eines industriellen Schmelzofens und insbesondere auf Blöcke aus Feuerfestmaterial, z. B. Abschlußsteine, die benachbart zu stählernen Trägern des industriellen Schmelzofens angeordnet werden, um die Träger vor extremer Hitze zu schützen.

### Hintergrund der Erfindung

Gewöhnlich besitzen industrielle Schmelzöfen drei wesentliche Bereiche, den Wannenofen im unteren Bereich des Schmelzofens, dann den Oberbau und schließlich die Decke, die oberhalb des Oberbaus angeordnet ist. Gewöhnlich bilden der Wannenofen und der Oberbau eine Heizkammer. Tragelemente aus Stahl wie Träger zum Abstützen der Decke und Stahlplatten zur Aufnahme der Seitenwände des Oberbaus sind so eingerichtet, daß die drei Teile des Schmelzofens unabhängig voneinander sind, so daß die drei Teile separat instandgehalten werden können.

Bisher bestand der übliche Weg stählerne Träger, insbesondere stählerne Trägerplatten, die oberhalb des Wannenofens vorstehen und den Oberbau aufnehmen, vor extremer Hitze zu schützen, darin, daß Blöcke aus Feuerfestmaterial, die als Abschlußsteine bezeichnet werden, oben auf der stählernen Trägerplatte aufzulagern, wobei die übrigen Feuerfestblöcke, die den Oberbau bilden, auf die Abschlußsteine aufgesetzt sind. Bekannte Abschlußsteine weisen im wesentlichen L-Form auf und besitzen einen Grundkörper, der auf die metallene Trägerplatte zu liegen kommt, sowie einen Nasenbereich, der nach vorn und unten vor der metallenen Trägerplatte nach der Innenseite des Schmelzofens übersteht und dabei die metallene Trägerplatte vor der direkten extremen Hitze in dem Schmelzofen schützt. Der Austausch der Abschlußsteine kann sich als notwendig erweisen, insbesondere im Fall eines kontinuierlichen Ofenbetriebs, wegen der Empfindlichkeit gegen Rißbildung infolge wechselnder Temperaturen, die evtl. zu einem Abbrechen der Nasen an den Abschlußsteinen führen kann, so daß der Schutz für die metallene Trägerplatte verlorengeht. Eine solche Beschädigung der Abschlußsteine und die nachfolgende Beschädigung der Trägerplatte können die Betriebszeit des Ofens reduzieren. Sie können teuere Heißreparaturen an den metallenen Trägerplatten erfordern. Es kann sich als notwendig erweisen, teuere Kühlschlangen in der Nähe der Abschlußsteine zu installieren, die dann im Maß ihrer Verschlechterung ersetzt werden müssen.

Da die Abschlußsteine oben auf der metallenen Trägerplatte aufgesetzt sind, bilden sie einen Teil des Oberbaus und können so mit nur dann ersetzt werden, wenn zugleich ein Teil des Oberbaus über den Abschlußsteinen ersetzt wird. Ein Beispiel eines Ofenbaus ist in der US-PS 4 213 753 dargestellt, wobei die Abschlußsteine den Oberbau tragen.

Die Benutzung von Abschlußsteinen mit sich nach unten erstreckenden Nasen, die über die innere Kante der horizontalen metallenen Trägerplatten vorstehen, bewirkt die Entstehung einer Kante von Abschlußsteinen, so daß der Oberbau im Ofen zurückspringt, so daß die Kapazität des Ofens im Wannenbereich erniedrigt wird. Außerdem bildet der Rand der Abschlußsteine einen Bereich im Ofen, an dem sich korrosive Chemikalien ablagern können, die die Schmelze verunreinigen können. Diese korrosiven Materialien können eine besondere Bedeutung erhalten, wenn es sich um einen Glasschmelzofen handelt. Wenn während des Betriebs des Ofens die Nase eines Abschlußsteins von dem Hauptkörper des Abschlußsteins abbricht und der zerbrochene Abschlußstein nicht ersetzt wird, kann eine Korrosion am oberen Rand der Seitenwandung des Wannenofens auftreten, wodurch die Flußlinie (Oberfläche der Schmelze) in direkten Flammenkontakt kommen kann, wobei die Konvektion verringert wird und die Menge der Schmelze verringert wird. Zusätzlich wird sich dann eine Zunahme im Energieverbrauch einstellen.

Es ist somit erkennbar, daß es wünschenswert wäre, eine Ofenkonstruktion bereitzustellen, in welcher die Abschlußsteine zweckentsprechend weggenommen, inspiziert und ausgetauscht werden können, sogar, wenn der Schmelzofen in Betrieb ist.

### Zusammenfassung der Erfindung

Kurz gefaßt sieht die Erfindung einen industriellen Schmelzofen vor, der eine Heizkammer im Innern aufweist und bei dem der Oberbau des Ofens direkt auf einer seitlich vorstehenden stählernden Trägerplatte aufgelagert ist. Die Abschlußsteine nach der vorliegenden Erfindung sind mit ihrem Nasenbereich so angeordnet, daß sie der Heizkammer des Schmelzofens zugekehrt sind und sich unterhalb der Trägerplatte befinden, so daß die Abschlußsteine nicht direkt den Oberbau des Ofens tragen. Die Zwischenräume, in denen die Abschlußsteinanordnung positioniert wird, werden zwischen der Oberseite der Seitenwände des Wannenofens und dem Boden der Trägerplatte gebildet. In den beschriebenen Ausführungsformen besitzt die Trägerplatte eine Mehrzahl von Hängespuren, die an der unteren Oberfläche angeordnet sind und die Abschlußsteine hängen an den Hängeschienen mit Hilfe von Aufhängeelementen. Die Aufhängeelemente sind beweglich in den Schienen in Richtung auf den Innenraum der Heizkammer des Schmelzofens und nach außen aufgehängt. Jede Abschlußsteinanordnung weist einen unteren Trägerblock mit einem vorderen Endbereich auf, der dem Innern der Heizkammer des Ofens zugekehrt ist. Jeder Trägerblock weist einen hinteren Endbereich auf, der nach außen abstehend vorgesehen ist. Jeder Trägerblock besitzt eine gekrümmte obere Oberfläche, die von dem vorderen inneren Ende zu dem hinteren Ende des Blocks durchgeht. Es ist ein beweglicher Nasenblock vorgesehen, der auf dem Trägerblock aufgelagert ist und einen Grundkörper besitzt, der eine untere gekrümmte Oberfläche aufweist, die entgegengesetzt gekrümmt ist, so daß der Trägerblock und die untere gekrümmte Oberfläche des Nasenblocks von der Oberfläche des Trägerblocks abgestützt ist. Der Nasenblock besitzt einen Nasenbereich, der von dem Hauptkörper nach aufwärts vorsteht, um die metallene Trägerplatte zu schützen.

Die abgeschrägten Oberflächen des Nasenblocks und des Trägerblocks sind vorzugsweise gekrümmt ausgebildet und korrespondieren zueinander, so daß eine Gleitverbindung zwischen dem Nasenblock und dem Trägerblock gebildet wird, so daß eine Vorwärtsbewegung des Nasenblocks in den Ofen hinein über das Stirnende des Trägerblocks bewirkt, daß der Nasenblock und insbesondere sein nach oben abstehender Nasenbereich nach unten geneigt abgesenkt wird. Demzufolge erniedrigt sich die Höhe der Abschlußsteinanordnung in einem solchen Maß, daß die Abschlußsteinanordnung in einen leeren Zwischenraum unter der Trägerplatte eingeschoben werden kann, wobei sie an der Trägerplatte aufgehängt ist. Nach dem Einschieben wird der obere bewegliche Nasenblock zurückgezogen, und zwar auf der oberen geneigten Oberfläche des Trägerblocks, bis er in seine Gebrauchsstellung mit entsprechender Profilhöhe kommt und die aufwärts gerichtete Nase die innere Kante der oberen Trägerplatte abdeckt und dadurch schützt.

In dieser beschriebenen Ausführungsform paßt der Nasenbereich des Abschlußsteins in eine Ausnehmung in einem Block des Oberbaus unmittelbar im Anschluß an die Trägerplatte, wobei die vordere Stirnseite der Abschlußsteinanordnung der Heizkammer zugekehrt ist und das hintere Ende nach außen steht.

Ein Austausch der Abschlußsteinanordnung wird dadurch erreicht, daß der Nasenblock und der Trägerblock relativ zueinander verschoben werden, bis die vertikalen Dimensionen der Abschlußsteinanordnung kleiner als die vertikalen Dimensionen der Öffnung in der Ofenwandung, in die die Abschlußsteinanordnung eingesetzt werden soll. Nachdem die vertikalen Dimensionen der Abschlußsteinanordnung so reduziert wurden, daß sie unterhalb der vorgesehenen Höhe der Öffnung liegen, kann die Abschlußsteinanordnung nach außen aus der Öffnung unter der metallenen Trägerplatte herausgezogen werden.

In dem beschriebenen Ausführungsbeispiel sind geschlitzte Schienen auf der Unterseite der metallenen Trägerplatte vorgesehen und jede Abschlußsteinanordnung ist vermittels einer Halteklammer aufgehängt, die einen T-Steg aufweist und in der geschlitzten Schiene auf der Unterseite der Trägerplatte eingreift. Die Halteklammer, die im wesentlichen einen umgekehrt U-förmigen Querschnitt aufweist, greift gleitend in den Trägerblock, während sie andererseits die freie Bewegung des Nasenblock entlang der geneigten Oberfläche des Trägerblocks gestattet. Dabei ist das hintere Ende des Nasenblocks so geformt, daß es an der Halteklammer anschlägt, wenn der Nasenblock am weitesten in Richtung auf das Innere des Ofens vorgeschoben ist, so daß damit ein Anschlag für das Vorschieben des Nasenblocks gebildet ist.

In den beschriebenen Ausführungsformen nach der Erfindung sind die geneigten Oberflächen des Nasenblocks und des Trägerblocks, die die Gleitverbindung bilden, gekrümmt ausgebildet, so daß der Nasenbereich des Nasenblocks zunehmend nach unten verschwenkt, also in Richtung einer geringeren Höhe, wenn der Nasenblock relativ zum Trägerblock in Richtung auf die Heizkammer des Ofens vorgeschoben wird.

Ein industrieller Schmelzofen besitzt normalerweise keine runde Form, sondern kann Ecken aufweisen, wobei sowohl Außenecken wie auch Innenecken auftreten können. Um eine vollständige Abschirmung durch Abschlußsteine zu erreichen, ist es notwendig, daß die Schienen auf der Unterseite der metallenen Trägerplatten in schräger Winkellage angeordnet sind, um das Einschieben der Abschlußsteinanordnungen an den jeweiligen Stellen der Ofenwandung zu gestatten. Wo eine solche Winkelpositionierung auftritt, sind die entsprechenden Abschlußsteine in den Schienen der Trägerplatte vermittels runder, mit Köpfen versehener Bolzen anstelle von T-förmigen Stegen aufgehängt, wobei die Köpfe der Bolzen in die geschlitzten Schienen eingreifen und es dadurch ermöglichen, daß die Abschlußsteinanordnung in den Schienen verschiebbar ist, ohne daß sie dabei gegen benachbarte Abschlußsteine anschlagen.

Es ist somit ein Ziel der vorliegenden Erfindung, die metallenen Trägerplatten des Ofens vermittels Abschlußsteinanordnungen zu schützen, die unabhängig von dem übrigen Aufbau des Ofens sind und somit auch unabhängig davon austauschbar sind.

Ein weiteres Ziel der Erfindung besteht darin, die Ofenkapazität zu vergrößern und die Ablagerung korrosiver Materialien zu vermeiden, indem der vorstehende Rand der Abschlußsteine vermieden wird.

Eine weitere Aufgabe der vorliegenden Erfindung besteht darin, die Kapazität des Ofens zu vergrößern und die Lebensdauer des Ofens zu verlängern, und zwar bei im wesentlichen konstantem Energieverbrauch.

Eine weitere Aufgabe der Erfindung ist es, einen Ofen mit einer Abschlußsteinanordnung aufzuzeigen, die zweckentsprechend und unabhängig ausgetauscht werden kann, ohne daß dabei der Oberbau beeinträchtigt wird.

Ein weiteres Ziel der Erfindung ist es, einen Ofen bereitzustellen, dessen Abschlußsteine austauschbar sind, ohne daß die anderen Bestandteile des Ofens beeinträchtigt werden.

Diese und andere Aufgabe, Merkmale und Vorteile der vorliegenden Erfindung werden aus der nachstehende detallierten Beschreibung ersichtlich, die in Verbindung mit den Zeichnungen zu sehen ist.

### Kurze Beschreibung der Zeichnungen

Die Figuren 1A und 1B zeigen gegenüberliegende Wände eines industriellen Schmelzofens, wobei Figur 1A den Abschlußstein nach dem Stand der Technik zeigt, während Figur 1B eine Ausführungsform der erfindungsgemäßen Ausbildung des Abschlußsteins zeigt;
Figur 2A zeigt eine perspektivische Darstellung des erfindungsgemäßen Abschlußsteins in der Benutzungslage;
Figur 2B ist eine perspektivische Darstellung des Abschlußsteins nach Figur 2A, jedoch in der Lage mit niedrigem Querschnitt zum Einsetzen und Austauschen.
Figur 3A ist eine Ansicht von rückwärts auf den Abschlußstein nach der Erfindung, wie er sich von der Außenseite des Schmelzofens darbietet, wenn der Abschlußstein ordnungsgemäß an der vorgesehenen Stelle im Schmelzofen eingesetzt ist.
Figur 3B zeigt eine Seitenansicht entsprechend der Linie 3b-3b der Figur 3A.
Figur 4 ist eine perspektivische Darstellung des Abschlußsteins der Figuren 3A und 3B;
Figur 5 zeigt eine perspektivische Darstellung eines Abschlußsteins, der für eine nach innen vorspringende Ecke des Schmelzofens ausgebildet ist.
Figur 6 ist eine perspektivische Darstellung eines Abschlußsteins für eine nach außen vorspringende Ecke im Schmelzofen;
Figur 7 zeigt eine perspektivische Darstellung des Abschlußsteins nach der Erfindung mit Hängebolzen anstelle T-förmiger Aufhängeelemente;
Figur 8A zeigt einen horizontalen Querschnitt durch einen Schmelzofen mit einem Teil 8b, durch eine Linie gekennzeichnet, und zwar entlang der Linie 8a-8a in Figur 1 und
Figur 8B ist eine detaillierte Darstellung des Teils 8b der Figur 8A, die die Schmelzofenwandung in Höhe der Aufhängeelemente für die Abschlußsteine zeigt und dabei die Schienenanordnung verdeutlicht, wie sie für nach innen und nach außen vorspringende Ecken erforderlich ist.

### Detaillierte Beschreibung

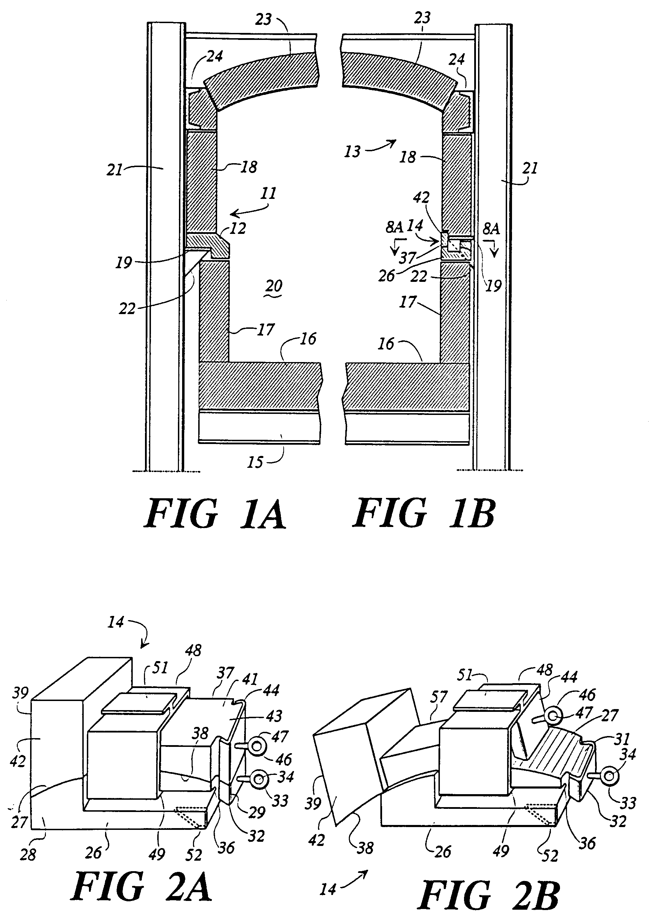

In den Zeichnungen, in denen gleiche Teile durchgehend durch die verschiedenen Ansichten mit übereinstimmendem Bezugszeichen versehen sind, zeigt Figur 1A einen Schnitt durch einen üblichen Ofen im Bereich der Wandung 11 mit bekannter Abschlußsteinanordnung 12, während Figur 1B einen Schnitt durch eine Ofenwandung mit erfindungsgemäßen Abschlußsteinen 14 darstellt.

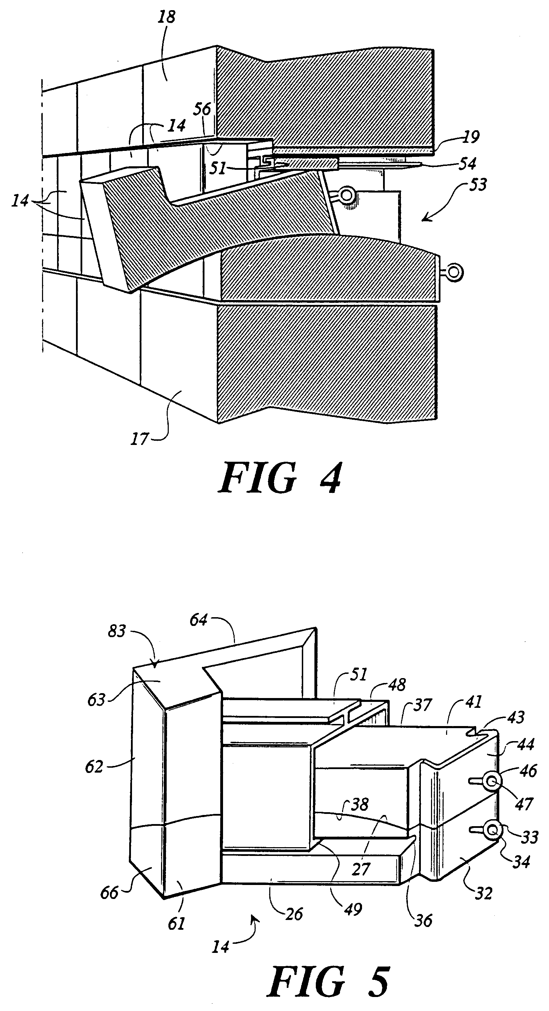

Die Wandung 11 ist auf geeigneten Trägern 15 abgestützt und weist einen Boden 16 auf, der aus entsprechendem Feuerfestmaterial erstellt ist und Seitenwandsteine 17 besitzt (Figur 4), die sich nach oben erstrecken und somit den Wannenofen 20 bilden. Oberhalb des Wannenofens befindet sich der Oberbau 18, der feuerfeste Blöcke aufweist, die auf einem Abschlußstein 12 angeordnet und von diesem getragen sind, wobei der Abschlußstein 12 wiederum sich auf einer Stahlplatte 19 abstützt. Das Innere des Wannenofens 20 und des Oberbaus 18 bilden die Heizkammer des Schmelzofens. Die Stahlplatten 19 werden wiederum von länglichen, sich vertikal erstreckenden Armierungen 21 getragen, an die die Stahlplatten vorzugsweise angeschweißt werden. Dreieckige Stützbleche 22, die an den Stahlplatten 19 und an den Armierungen 21 angeschweißt sind, erbringen eine weitere Abstützung der Stahlplatten 19.

Aus der linken Darstellung der Figur 1, die dem Stand der Technik entspricht, ist es am besten erkennbar, daß die Nase des bekannten Abschlußsteins 12 vergleichsweise dick ausgebildet ist, um die Stahlplatte 19 vor einem Wärmeschock zu schützen. Diese große Dicke ist auch deshalb erforderlich, weil der Abschlußstein 12 nicht austauschbar ist, wie es bereits ausgeführt wurde. Wegen dieser großen Dicke müssen die Seitenwandsteine 17 nach innen vorspringen, wie dargestellt, damit sich ein glatter Übergang von den Seitenwandsteinen 17 zu der Nase des Abschlußsteins 12 ergibt. Die nach innen vorspringenen Seitenwandsteine 17 reduzieren die Aufnahmefähigkeit des Wannenofens und bewirken, daß die innere Oberfläche der Seitenwandsteine entsprechend der Nase des Abschlußsteins vorstehen.

Andererseits, beim Aufbau einer neuen Ofenwandung 13 nach der vorliegenden Erfindung, erfordert die Abschlußsteinanordnung 14 keine übermäßig dick ausgebildete Nase. Darüberhinaus ist die neue Abschlußsteinanordnung leicht austauschbar, wie noch beschrieben wird. Infolge der kleineren Ausbildung der Nase bei der neuen Abschlußsteinanordnung ist es nicht notwendig, daß die Seitenwandsteine 17 nach innen vorspringen, wodurch die Aufnahmekapazität des Wannenofens größer als bei bisher bekannten Wandungen 11 ist.

Figur 2A zeigt eine Abschlußsteinanordnung 14 nach der vorliegenden Erfindung in ihrer Gebrauchslage mit hohem Querschnitt, wobei die Nase des Nasenblocks der Heizkammer zugeordnet ist. Figur 2B zeigt die gleiche Abschlußsteinanordnung in ihrer Lage mit niedrigem Querschnitt zum Einsetzen oder Austauschen. Wie dargestellt, weist die Abschlußsteinanordnung 14 einen Trägerblock 26 auf, der eine konvex gekrümmte Oberfläche 27 besitzt, die segmentartig vom vorderen Ende 28 des Trägerblocks 26 bis zu dem hinteren Ende 29 durchgeht. Das hintere Ende 29 ist mit einem Schwalbenschwanz 31 versehen, wie es am besten aus Figur 2B ersichtlich ist, an welchem eine metallene Halteklammer 32 befestigt ist, die in Übereinstimmung mit dem Schwalbenschwanz 31 ausgebildet ist. Auf der Halteklammer 32 ist ein mit einem Auge 34 versehener Ziehbolzen 33 vorgesehen. Montagenuten 36 erstrecken sich längs des Trägerblocks 26 an gegenüberliegenden Seiten ausgehend vom hinteren Ende 29 in Richtung auf das vordere Ende. In den Figuren 2A und 2B ist nur eine Montagenut 36 sichtbar.

Ein beweglicher Nasenblock 37 ist auf dem Trägerblock 26 aufgelagert. Der Nasenblock 37 besitzt eine konkave untere Oberfläche 38 in Form eines Segments mit dem gleichen Radius wie die Oberfläche 27 des Trägerblocks 26. Die untere konkave Oberfläche des Nasenblocks erstreckt sich von der vorderen Oberfläche 39 der Nase bis zu der hinteren Oberfläche 41 des Blocks 37. Die zwei miteinander zusammenarbeitenden Oberflächen 27 und 38 bilden eine langgestreckte, gekrümmte Gleitverbindung. Das vordere Ende 39 des Nasenblocks 37 besitzt eine Nase 42, die, wie in Figur 1B dargestellt, so ausgebildet ist, daß die Stahlplatte 19 abgedeckt und geschützt wird. Das hintere Ende 41 des Nasenblocks 37 ist mit einem Schwalbenschwanz 43 versehen, um eine Halteklammer 44 anzusetzen, die entsprechend ausgebildet ist. Die Halteklammer 44 besitzt einen Ziehbolzen 46 mit einem Auge 47.

Eine Trägerklammer 48, die im wesentlichen die Form eines umgekehrten U hat, besitzt ein paar nach innen vorspringende Flansche 49 an den freien Enden der sich nach unten erstreckenden Arme, wobei nur ein Flansch ersichtlich ist. Die Flansche greifen auf den entgegengesetzten Seiten in den Trägerblock 26 ein. Die Innenraumabmessungen der Trägerklammer 48, z. B. der Abstand zwischen den sich nach unten erstreckenden Abschnitten des umgekehrten U sind derart ausgebildet, daß der Nasenblock 37 sich ohne Störung in Längsrichtung frei bewegen kann, während die äußeren breiten Abmessungen der Trägerklammer 48 kleiner als die Breite der Nase 42 des Trägerblocks 26 sind. Oben an der Trägerklammer 48 ist ein T-förmiger Steg 51 angeordnet, dessen Aufgabe es ist, in Schienen an der Unterseite der Stahlplatte 19 verschoben zu werden, wie dies weiter unten näher erläutert wird.

Wenn die Abschlußsteinanordnung 14 neben einem dreieckigen Stützblech 22 angeordnet werden soll, wie dies in Figur 1 ersichtich ist, ist es notwendig, daß sich diese Teile gegenseitig nicht stören. In diesem Fall muß der Trägerblock 26 im Bereich seines hinteren Endes Ausschnitte 52 aufweisen, wie dies in gestrichelter Linienführung in den Figuren 2A un 2B angedeutet ist, damit ein entsprechender Freiraum für die dreieckigen Stützbleche 22 entsteht.

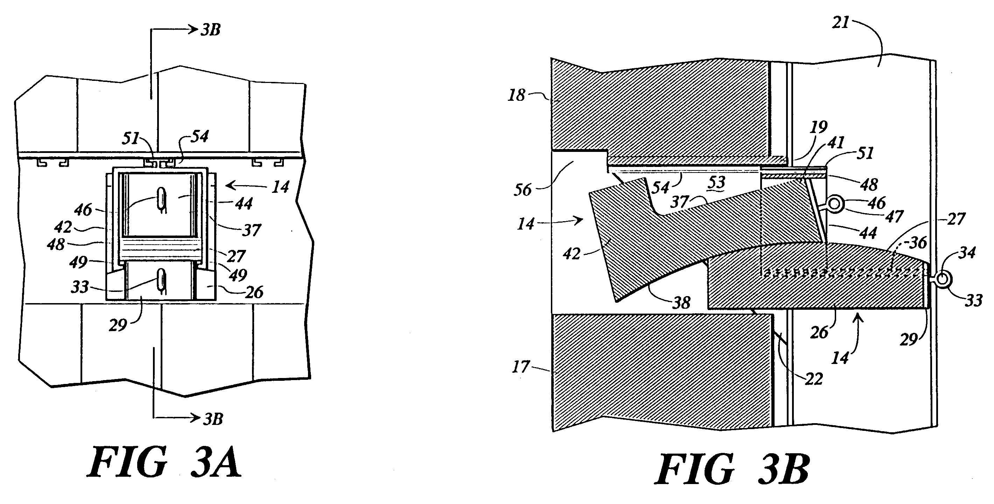

Figur 3A zeigt die Ansicht auf das hintere Ende der Abschlußsteinanordnung nach den Figuren 2A und 2B und Figur 3B ist eine Seiten-Schnittansicht nach der Linie 3b-3b in Figur 3A, wobei die Abschlußsteinanordnung 14 in der Lage dargestellt ist, in der sie eingesetzt bzw. ausgetauscht wird. Wie es insbesondere aus Figur 3B ersichtlich ist, sind der Nasenblock 37 und der Trägerblock 26 zum Einsetzen in die Öffnung 53 unter der Stahlplatte 19 gleitend über ihre Gleitverbindung relativ zueinander so verschoben, daß der Nasenbereich 42 der abwärts geneigten Gleitbahn gefolgt ist, wodurch sich die Profilhöhe der Abschlußsteinanordnung 14 auf eine solche Höhe erniedrigt hat, die kleiner ist als die Höhe der Öffnung 53. Die Trägerklammer 48 hält das hintere Ende 41 fest, wie es in Figur 3B dargestellt ist, wodurch verhindert wird, daß der Nasenblock 37 sich zu weit nach vorwärts verlagern kann, so daß die Gefahr bestünde, daß er von dem Trägerblock 26 abrutscht.

Wie in Figur 3B dargestellt ist, wird der T-Steg 51, nachdem der Nasenblock 37 nach vorn bewegt wurde, in eine geschlitzte Schiene 54 eingehängt, die auf der Unterseite der Stahlplatte 19 vorgesehen ist. Die gesamte Abschlußsteinanordnung 14 kann somit in ihrer Relativlage mit geringer Profilhöhe in die Öffnung 53 eingeschoben werden und in ihre Gebrauchslage gelangen. Nachdem die Abschlußsteinanordnung 14 ordnungsgemäß eingeschoben ist, kann der bewegliche Nasenblock 37 nach rückwärts gezogen werden vermittels des Ziehbolzens 46, bis der Nasenbereich 42 genau in der Ausnehmung 56 des Oberbaus 18 eintritt und die Gebrauchslage erreicht ist. Dabei ergibt sich ein stufenloser Übergang von dem Oberbau 18 zu den Seitenwandsteinen 17, die den Wannenteil des Ofens 13 bilden.

Figur 4 zeigt eine Abschlußsteinanordnung 14, die vollständig vermittels des T-Stegs 51 in die Öffnung 53 eingeschoben ist, und zwar am vorderen Ende der Schiene 54, wobei sich der Nasenblock noch nicht in der Benutzungsstellung befindet. Aus Figur 4 ist jedoch auch ersichtlich, daß verschiedene andere Abschlußsteinanordnungen 14 sich bereits in der Gebrauchslage befinden.

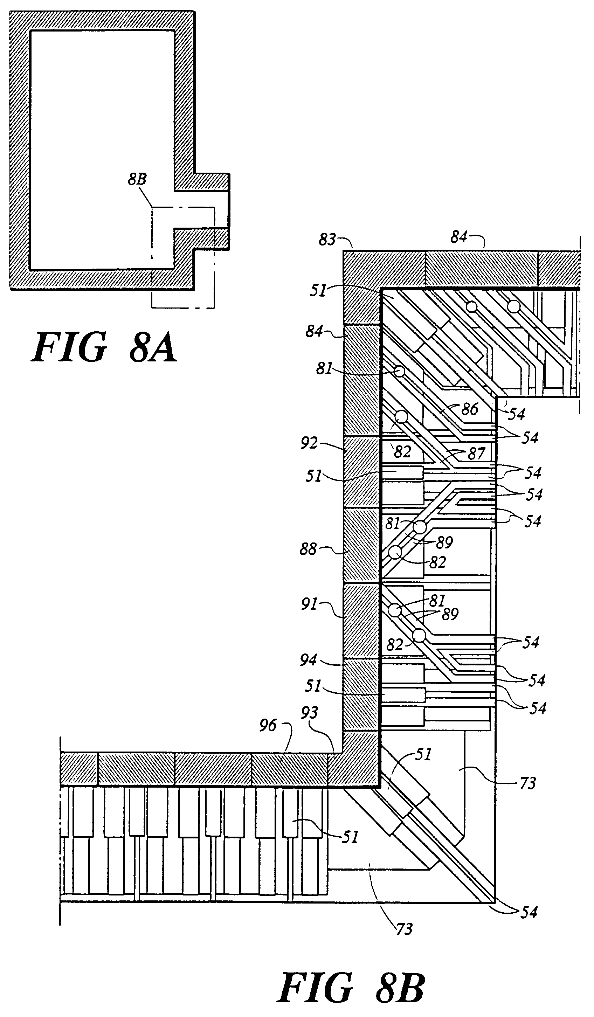

Figur 5 zeigt eine Abschlußsteinanordnung 14 nach der Erfindung, die für eine nach innen vorspringende Ecke 83 in 90°-Anordnung im Bereich der Ofenwandung (Figur 8B) bestimmt ist, und zwar in ihrer Gebrauchslage. Der Aufbau der Abschlußsteinanordnung 14 ist prinzipiell identisch mit demjenigen, wie er in Figur 2A gezeigt ist, mit der Ausnahme, daß die vorderen Enden 61 und 62 der Blöcke 26 und 37. Es ist ersichtlich, daß das vordere Ende 62 des Nasenblocks 37 einen ersten und einen zweiten Abschnitt 63 und 64 besitzt, die einen 90°-Winkel miteinander bilden. Das vordere Ende des Trägerblocks 26 besitzt Abschnitte 66 und 67, wobei nur der Abschnitt 66 ersichtlich ist, die mit den Bereichen 63 und 64 korrespondieren, um einen glatten Übergang in der Gebrauchsstellung zu ergeben.

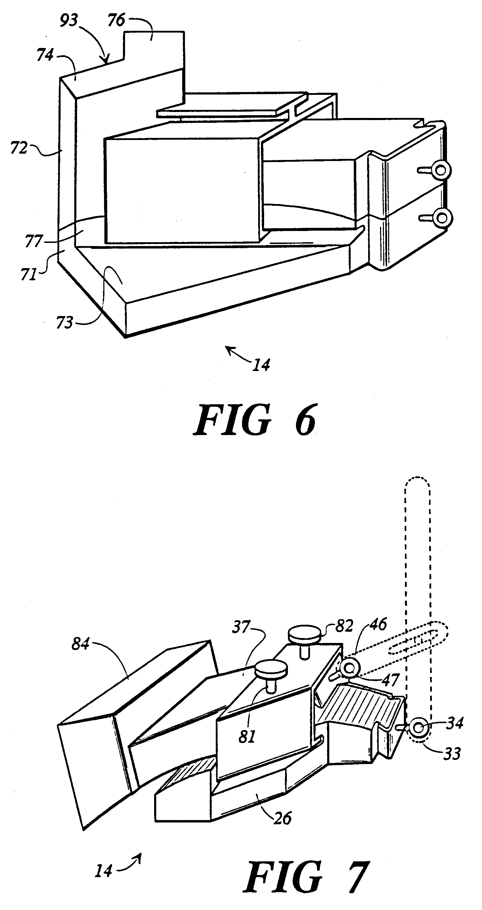

In Figur 6 ist eine Abschlußsteinanordnung 14 dargestellt, wie sie für eine nach außen vorspringende Ecke 93 in 90°-Anordnung im Bereich der Ofenwandung (Figur 8B) in der Gebrauchsstellung sich darbietet. Wie im Fall der Ausbildung einer Innenecke gemäß Figur 5 ist auch die Anordnung gemäß Figur 6 im wesentlichen die gleiche wie bei der Ausbildung nach Figur 2A, jedoch mit der Ausnahme, daß die vorderen Enden 71 und 72 der Blöcke 26 und 37 entsprechend ausgebildet sind. Zusätzlich besitzt der Block 26 Randbereiche 73 auf beiden Seiten, an die sich benachbarte Abschlußsteine anlegen, wie dies klarer in Figur 8B dargestellt ist. Aus Figur 6 ist erkennbar, daß das vordere Ende 72 einen ersten und zweiten Bereich 74 und 76 aufweist, die entsprechend dem 90°-Winkel geformt sind. Das vordere Ende 71 besitzt ebenso zwei Bereiche 77 und 78 (wobei nur der Bereich 77 dargestellt ist), die eine 90°-Ecke bilden, so daß ein glatter, fluchtender Nasenbereich der Anordnung 14 mit den Bereichen 74 und 76 gebildet wird. Obwohl die für die Eckausbildung ausgebildeten Nasensteine der Figuren 5 und 6 90°-Ecken bilden, versteht es sich, daß für den Fall, daß der Ofen andere Ecken als 90°-Ecken aufweist, die Winkel zwischen den Bereichen 63, 64 und 66, 67 und 76, 76 und 77, 78 entsprechend den dann vorgesehenen Winkeln ausgebildet sein können bzw. müssen.

Figur 7 zeigt eine Abschlußsteinanordnung 14, wie sie für die Anordnung an der Stelle 84 bestimmt ist, also im Anschluß an eine nach innen vorspringende Ecke entsprechend den Figuren 5 und 8B. Wie es bei der Beschreibung der Figur 8B noch deutlicher werden wird, besitzt die Abschlußsteinanordnung 14 nach Figur 7 eine halbtrapezartige Ausbildung. Wegen dieser Gestalt und wegen der Gegebenheiten bei der Anwendung ist es notwendig, den T-Steg der vorher beschriebenen Abschlußsteine durch eine Konstruktion mit Kängebolzen 81 und 82 zu ersetzen, um die Montage und Positionierung des Abschlußsteins in der Ofenwandung zu ermöglichen. In Figur 7 ist in gestrichelter Linienführung ein Werkzeug dargestellt, mit dem es möglich ist, den oberen Nasenblock 37 in seine Gebrauchslage mit größer Köhenerstreckung zurückzuziehen. Das Werkzeug weist einen länglichen Arm auf, dessen eines Ende schwenkbar in dem Auge 34 des Ziehbolzens 33 gelagert ist. Das Werkzeug besitzt weiter einen kürzeren Hebel, der schwenkbar an dem längeren Hebel gelagert ist und an seinem einen Ende schwenkbar in dem Auge 47 des Ziehbolzens 46 angreift. Durch eine Schwenkbewegung im Uhrzeigersinn wird über den oberen Teil des Hebels der Nasenblock 37 zurück in seine Gebrauchsstellung gezogen; sodann kann das Werkzeug entfernt werden. Das Werkzeug, wie es dargestellt ist, zeigt eine Anordnung, um damit die Blöcke relativ zueinander zu bewegen.

In Figur 8A ist ausschnittweise ein Grundriß des Ofens nach der Linie 8a-8a der Figur 1 dargestellt und ein vergrößertes Detail 8b ist ersichtlich, welches Außen- und Innenecken im Bereich der Abschlußsteinanordnung aufweist. Um einer Verwechslung vorzubeugen, ist jede Abschlußsteinanordnung mit einer eigenen Identifizierungsnummer versehen. In der vergrößerten Detaildarstellung gemäß Figur 8B ist die Abschlußsteinanordnung 83, die die nach innen vorspringende Ecke bildet, an einer Schiene 54 aufgehängt, die auf der Unterseite der Stahlplatte 19 vorgesehen ist, und zwar über einen T-Steg 51. Die Installation ist einfach, indem der obere bewegliche Block 37 nach vorwärts verdreht wird. Der Abschlußstein 63 wird hineingeschoben und nach vorwärts in seine Position gebracht. Anschließend wird der Block 37 nach rückwärts in die Gebrauchslage verdreht. Benachbart zu dem Abschlußstein, der eine Innenecke bildet, werden Abschlußsteinanordnungen 84 über ein Schienenpaar 86 und 87 mit Hilfe von Hängebolzen 81 und 82 angebracht. Für das Einschieben wird wiederum der obere Block 37 nach vorn gedreht und die Einrichtung entlang der Schienen 86 und 87 verschoben, die, wie sichtbar ist, gerade Bereiche 54 aufweisen, von denen dann Schienenzweige 86 und 87 in einem Winkel von 45° abzweigen.

Die Abschlußsteinanordnung 88 der Figur 8B zeigt das Einbringen, wenn an dieser Stelle ein dreieckiges Stützblech (nicht dargestellt) im Weg ist. Die Abschlußsteinanordnung 88 besitzt einen Ausschnitt 52 für das Stützblech und ist über Schienen 89 geführt, die in einem Winkel von 45° von den Schienen 54 abzweigen. Das Verschieben geschieht unter Zuhilfenahme der mit Köpfen versehenen Hängebolzen 81 und 82. Das Einsetzen gestaltet sich ähnlich, wie dies bei der Abschlußsteinanordnung 84 beschrieben wurde. In gleicher Weise wird die Abschlußsteinanordnung 91 eingeschoben, wobei die Anordnung und das Einschieben spiegelbildlich zu der Anordnung 88 erfolgt. Die Abschlußsteinanordnungen 88 und 91 gestatten, wenn sie montiert sind, das Einschieben einer Abschlußsteinanordnung 92, was dann geradlinig erfolgen kann. Die Abschlußsteinanordnung 93 mit der Außenecke wird geradlinig entsprechend der Schiene 54 eingeschoben, worauf die Abschlußsteinanordnungen 94 und 96 ebenfalls geradlinig montiert werden können. Falls eine der Abschlußsteinanordnungen 83, 84, 88, 91, 92, 93, 94 oder 96 entfernt werden sollen, ist es nur bezüglich der Abschlußsteinanordnungen 92, 94 und 96 möglich, diese zu entfernen, ohne vorher eine benachbarte Abschlußsteinanordnung wegnehmen zu müssen. Wenn jedoch beispielsweise die Abschlußsteinanordnung 93 mit der Außenecke entfernt werden soll, müssen vorher die Abschlußsteinanordnungen 94 und 96 weggenommen werden, damit der Block 37 der Abschlußsteinanordnung 93 nach vorn in seine Austauschstellung gedreht werden kann. Die Abschlußsteinanordnung 94 muß ebenfalls dann entfernt werden, wenn die Abschlußsteinanordnung 91 ausgetauscht werden soll und die Abschlußsteinanordnung 92 muß entfernt werden, wenn die Abschlußsteinanordnung 88 ausgetauscht werden soll. In gleicher Weise müssen die Abschlußsteinanordnungen 92 und beide Abschlußsteinanordnungen 84 zuerst entfernt werden, wenn die Abschlußsteinanordnung 83 mit der Innenecke entfernt werden soll. Entsprechenden Merkmalen der vorliegenden Erfindung ist der Austausch jeder Abschlußsteinanordnung ein relativ einfacher Vorgang und aus der vorangehenden Beschreibung klar ersichtlich.

Aus den obigen Ausführungen wird auch klar, daß die heißen Abschlußsteinanordnungen für ihren Austausch nicht unbedingt eine Fertigungsunterbrechung in dem Schmelzofen erfordern. Die Lebensdauer des Ofens wird verlängert, die Ofenkapazität erhöht und die Schmelzqualität verbessert. Weiterhin ist der Energiebedarf des Schmelzofens relativ konstant und Aufwendungen für Reparaturen in heißem Zustand sind eliminiert. Die vorangehende Beschreibung und die Zeichnungen verdeutlichen die Prinzipien der vorliegenden Erfindung anhand eines bevorzugten Ausführungsbeispiels. Zahlreiche Variationen oder Modifikationen sind für Fachleute offensichtlich, ohne daß damit die Erfindung verlassen wird.

## Patentansprüche

1. Industrieller Schmelzofen mit einer im Innern angeordneten Heizkammer und einer äußeren Umhüllung sowie mit einer Trägerplatte zum Auflagern mindestens eines Teils der Wandung des Ofens, wobei eine Abschlußsteinanordnung für die Anordnung im Bereich der Ofenwandung im Zwischenraum zwischen der Trägerplatte und der Ofenwandung unterhalb dieser Trägerplatte vorgesehen ist und die Abschlußsteinanordnung folgende Merkmale aufweist:
es ist ein Trägerblock mit einem Stirnbereich, der in Richtung auf die Heizkammer des Ofens vorsteht, vorgesehen, der einen hinteren Endbereich aufweist, der in Richtung auf die Außenumhüllung des Ofens vorsteht, wobei der Trägerblock eine obere Oberfläche aufweist;
es ist ein Nasenblock vorgesehen, der auf dem Trägerblock aufgelagert ist und einen vorderen Stirnbereich, der der Heizkammer des Schmelzofens zugekehrt ist, besitzt, sowie einen hinteren Endbereich, der in Richtung auf die Außenumhüllung des Ofens vorsteht, wobei der Nasenblock eine untere Oberfläche aufweist, die so gestaltet ist, daß sie zu der oberen Oberfläche des Trägerblocks in der Weise korrespondiert, daß eine Gleitverbindung zwischen den beiden Blöcken gebildet wird;
die zueinander passenden Oberflächen des Trägerblocks und des Nasenblocks besitzen eine solche Formgebung, daß die vertikale Höhe der Abschlußsteinanordnung sich ändert, wenn die Blöcke relativ zueinander entlang der Gleitverbindung bewegt werden,
wobei die Blöcke in eine gegenseitige Relativlage mit geringer vertikaler Ausladung gebracht und so in den Zwischenraum zwischen der Trägerplatte und der unter der Trägerplatte befindlichen Ofenwandung bewegt werden können und wobei es möglich ist, die Blöcke über ihre Gleitverbindung in eine solche gegenseitige Lage zu verschieben, daß ihre Vertikalausladung vergrößert und der Zwischenraum ausgefüllt wird.

2. Industrieller Schmelzofen nach Anspruch 1, dadurch gekennzeichnet, daß die Formgebung der oberen Oberfläche des Trägerblocks der Abschlußsteinanordnung konvex ist, und daß die untere Oberfläche des Nasenblocks eine konkave Gestalt besitzt.

3. Industrieller Schmelzofen nach Anspruch 1, dadurch gekennzeichnet, daß der vordere Stirnbereich des Nasenblocks eine abstehende Nase aufweist, die die Trägerplatte gegenüber der Heizkammer des Ofens abdeckt, wenn die Abschlußsteinanordnung im Ofen in Gebrauchsstellung ist.

4. Industrieller Schmelzofen nach Anspruch 3, dadurch gekennzeichnet, daß der Nasenbereich winklig zueinander angeordnete Teile aufweist.

5. Industrieller Schmelzofen nach Anspruch 4, dadurch gekennzeichnet, daß der erste und zweite Teil eine nach außen vorspringende Ecke bilden, wenn die Abschlußsteinanordnung in dem Ofen in Gebrauchslage installiert ist.

6. Industrieller Schmelzofen nach Anspruch 4, dadurch gekennzeichnet, daß der erste und zweite Teil eine nach innen vorspringende Ecke bilden, wenn die Abschlußsteinanordnung in dem Ofen in Gebrauchslage installiert ist.

7. Industrieller Schmelzofen nach Anspruch 4, dadurch gekennzeichnet, daß die Teile einen 90°-Winkel bilden.

8. Industrieller Schmelzofen nach Anspruch 1, dadurch gekennzeichnet, daß Mittel zum Aufhängen der Abschlußsteinanordnung an der Unterseite einer Trägerplatte vorgesehen sind.

9. Industrieller Schmelzofen nach Anspruch 8, dadurch gekennzeichnet, daß die Aufhängemittel eine Trägerklammer zum Aufhängen des Trägerblocks aufweisen.

10. Industrieller Schmelzofen nach Anspruch 9, dadurch gekennzeichnet, daß an der Trägerklammer ein C-förmiger Steg vorgesehen ist.

11. Industrieller Schmelzofen nach Anspruch 9, dadurch gekennzeichnet, daß an der Trägerklammer Hängebolzen vorgesehen sind.

12. Industrieller Schmelzofen nach Anspruch 9, dadurch gekennzeichnet, daß die Trägerklammer einen umgekehrt U-förmigen Querschnitt mit sich nach unten erstrecknden Schenkeln mit einander zugekehrten Enden aufweist, wobei der bewegliche Block zwischen den Schenkeln verschiebbar ist.

13. Industrieller Schmelzofen nach Anspruch 12, dadurch gekennzeichnet, daß der Trägerblock eine erste und zweite Montagenut aufweist, und daß die einander zugekehrten Enden der Schenkel einen Flansch besitzen, der in die Montagenuten eingreift.

14. Abschlußsteinanordnung für einen industriellen Schmelzofen mit einer Heizkammer und einem Träger für einen Teil der Wandung des Ofens und mit einer Unterseite, wobei die Abschlußsteinanordnung den Träger gegenüber der Heizkammer des Schmelzofens schützt und einen inneren Endbereich, der der Heizkammer des Schmelzofens zugekehrt ist, und einen äußeren Endbereich aufweist, der der Heizkammer abgekehrt ist sowie mit folgenden Merkmalen:
es ist ein Trägerblock mit einer oberen Oberfläche und ein Nasenblock mit einer unteren Oberfläche vorgesehen, die aufeinander abgestimmt sind, so daß eine Gleitverbindung zwischen den Blöcken gebildet wird, so daß, wenn die Abschlußsteinanordnung in eine Öffnung in der Ofenwandung eingesetzt ist, der Trägerblock und der Nasenblock relativ zueinander über die Gleitverbindung bewegbar sind und der Nasenblock in eine Position kommt, in der er den Träger schützt.

15. Abschlußsteinanordnung nach Anspruch 14, dadurch gekennzeichnet, daß der Nasenblock eine vordere und eine hintere Stirnpartie aufweist, wobei die vordere Stirnpartie einen verlängerten Nasenbereich besitzt, der nach oben über den Nasenblock vorsteht.

16. Abschlußsteinanordnung nach Anspruch 15, dadurch gekennzeichnet, daß der Nasenblock einen vorderen und einen hinteren Bereich aufweist und die untere Oberfläche von dem vorderen Bereich bis zu dem hinteren Bereich durchgeht.

17. Abschlußsteinanordnung nach Anspruch 16, dadurch gekennzeichnet, daß der Trägerblock einen vorderen und einen hinteren Bereich aufweist, und daß die obere Oberfläche des Trägerblocks sich von dem vorderen bis zu dem hinteren Bereich erstreckt.

18. Abschlußsteinanordnung nach Anspruch 14, dadurch gekennzeichnet, daß eine Trägerklammer zur Aufnahme des Trägerblocks vorgesehen ist.

19. Abschlußsteinanordnung nach Anspruch 14, dadurch gekennzeichnet, daß die obere Oberfläche konvex und die untere Oberfläche konkav ausgebildet ist.

20. Abschlußsteinanordnung nach Anspruch 14, dadurch gekennzeichnet, daß an der Unterseite des Trägers Mittel, die eine geschlitzte Schiene bilden, vorgesehen sind, daß eine Trägerklammer zur Aufnahme des Trägerblocks vorgesehen, und daß die Trägerklammer Mittel zum Eingreifen in die Schiene aufweist.

21. Abschlußsteinanordnung nach Anspruch 20, dadurch gekennzeichnet, daß die Mittel an der Trägerklammer einen T-förmigen Steg umfassen.

22. Abschlußsteinanordnung nach Anspruch 20, dadurch gekennzeichnet, daß die Mittel auf der Trägerklammer mindestens einen Kopfbolzen umfassen.

23. Abschlußsteinanordnung nach Anspruch 20, dadurch gekennzeichnet, daß die geschlitzte Schiene sich von außen nach innen bis zu einem bestimmten Punkt des Ofens erstreckt.

24. Abschlußsteinanordnung nach Anspruch 23, dadurch gekennzeichnet, daß die geschlitzte Schiene einen ersten Teil außerhalb des Ofens aufweist und einen zweiten Teil besitzt, der gegenüber dem ersten Teil winklig abzweigt.

25. Abschlußsteinanordnung mit einer Gebrauchsstellung und einer Einsatzstellung, mit einem Trägerblock mit oberer Oberfläche und einem beweglichen Nasenblock mit unterer Oberfläche, der auf dem Trägerblock unter Kontakt der beiden Oberflächen aufgelagert ist, wobei die Abschlußsteinanordnung in ihrer Gebrauchsstellung einen ersten Längsquerschnitt aufweist, und mit Mitteln zum Vermindern des longitudinalen Querschnitts der Abschlußsteinanordnung von einem ersten longitudinalen Profil in ein zweites, reduziertes longitudinales Profil, wobei die Abschlußsteinanordnung in einen Zwischenraum eingeschoben werden kann und mindestens in einer Dimension kleiner als die Dimension des ersten longitudinalen Profils ausgebildet ist.

26. Abschlußsteinanordnung nach Anspruch 22, dadurch gekennzeichnet, daS die Mittel zum Vermindern des Längsquerschnitts eine in Längsrichtung konvex gekrümmte obere Oberfläche und eine in Längsrichtung konkav gekrümmte untere Oberfläche aufweisen, die zueinander passen.

27. Verfahren zum Anbringen einer Abschlußsteinanordnung in einem Ofen mit einer Außenhülle und einer inneren Heizkammer und mit einer Trägerplatte und einer Wandung unterhalb und im Abstand zu der Trägerplatte, durch die eine Öffnung mit vorbestimmter Höhe gebildet wird, wobei der Abschlußstein einen Trägerblock mit vorderen und hinteren Enden und eine gekrümmte Trägerfläche aufweist und ein beweglicher Nasenblock vorgesehen ist, der vordere und hintere Enden und eine gekrümmte Oberfläche besitzt, die der gekrümmten Trägeroberfläche zugeordnet ist, mit folgenden Verfahrensschritten:
die gekrümmten Oberflächen des Nasenblocks und des Trägerblocks werden in eine Relativlage gebracht, in der sie ein longitudinales Profil bilden, wobei die Abschlußsteinanordnung in dieser Konfiguration eine verringerte Höhe aufweist,
die Abschlußsteinanordnung wird mit ihren niedrigen Profilen in die Öffnung eingeschoben und in Richtung auf die Heizkammer im Innern des Schmelzofens bewegt,
schließlich wird der Nasenblock gegenüber dem Trägerblock entlang ihrer gekrümmten Oberflächen so verschoben, daß das longitudinale Profil der Abschlußsteinanordnung bis zu einer Dimension größer als die vorgesehene Höhe vergrößert wird.

28. Verfahren nach Anspruch 27, dadurch gekennzeichnet, daß der Schritt des Verschiebens der gekrümmten Oberflächen zueinander den Schritt des Verschiebens des Nasenblocks nach vorn überstehend über die Stirnfläche des Trägerblocks beinhaltet.

29. Industrieller Schmelzofen mit einer Seitenwandstruktur, die einen Wannenofen und einen Oberbau oberhalb des Wannenofens einschließt und eine seitlich vorstehende metallene Trägerplatte aufweist, die zwischen dem Wannenofen und dem Oberbau vorsteht, und mit einer Abschlußsteinanordnung, die an der metallenen Trägerplatte angeordnet ist und dabei die metallene Trägerplatte gegen Wärme im Ofen schützt, dadurch gekennzeichnet, daß die Abschlußsteinstruktur eine Reihe von Abschlußsteinanordnungen entlang der Länge der metallenen Trägerplatte aufweist und jede Abschlußsteinanordnung einen Nasenblock und einen Trägerblock umfaßt, wobei der Nasenblock einen Grundkörper und einen vergrößerten Nasenbereich am einen Ende des Grundkörpers aufweist und der Grundkörper eine Form besitzt, über die er mit der metallenen Trägerplatte in Kontakt tritt, wobei der vergrößerte Nasenbereich so geformt ist, daß er die metallene Trägerplatte vor Wärmeeinfluß aus dem Ofen schützt, wenn der Grundkörper die metallene Trägerplatte berührt, wobei der Trägerblock und der Nasenblock jeweils einander zugekehrte Oberflächen aufweisen, die eine Gleitverbindung bilden, so daß der Nasenblock, wenn er mit seiner vergrößerten Nase nach vorwärts in den Ofen geschoben ist, unterhalb der metallenen Trägerplatte ist und der Trägerblock und der Nasenblock relativ zueinander bewegbar sind, so daß der Nasenblock in eine Lage verschiebbar ist, in der er die metallene Trägerplatte schützt.
